# EUROPÄISCHE PATENTSCHRIFT

(11) **EP 2 800 719 B1**
(45) Veröffentlichungstag und Bekanntmachung des Hinweises auf die Patenterteilung: **14.10.2015**
(21) Anmeldenummer: 13771410.1
(22) Anmeldetag: 13.09.2013
(51) Int. Cl.: B66D 1/14, B66D 1/26, F16D 11/04, F16D 11/10, F16D 11/14

(54) **TROMMELFÖRDERMASCHINE MIT EINER ANGETRIEBENEN HAUPTWELLE**
DRUM HOIST WITH A DRIVEN MAIN SHAFT
MACHINE D'EXTRACTION À TAMBOUR COMPORTANT UN ARBRE PRINCIPAL ENTRAINÉ

(30) Priorität: 02.10.2012 DE 102012109398
(43) Veröffentlichungstag der Anmeldung: 12.11.2014
(73) Patentinhaber: Olko-Maschinentechnik GmbH, 59399 Olfen (DE)
(72) Erfinder: SCHRÖDER, Walter, 57258 Freudenberg (DE)
(74) Vertreter: Kohlmann, Kai
(86) Internationale Anmeldenummer: PCT/EP2013/068997
(87) Internationale Veröffentlichungsnummer: WO 2014/053299

(56) Entgegenhaltungen:
- DE-C- 922 194

## Beschreibung

Die Erfindung betrifft eine Trommelfördermaschine mit einer angetriebenen Hauptwelle, mindestens einer auf der Hauptwelle angeordneten Lostrommel mit einer Feststellbremse, einer Versteckvorrichtung zur lösbaren Verbindung von Lostrommel und Hauptwelle, die ein mit der Lostrommel drehfest verbundenes Trommelrad mit einer Innenverzahnung, ein mit der Hauptwelle drehfest verbundenes Wellenrad mit einer Außenverzahnung, ein Kuppelrad mit einer Außen- und einer Innenverzahnung, die axial in einer Einrück- und einer Ausrückrichtung auf der Außenverzahnung des Wellenrades verschiebbar ist, einen mit dem Kuppelrad stirnseitig drehfest verbundenen Schiebering und ein gestellfest an der Trommelfördermaschine angeordnete Schaltvorrichtung zum Verschieben des Schieberings in einer Einrück- und Ausrückrichtung, aufweist, wobei die Außenverzahnung des Kuppelrades durch die axiale Verschiebung in Einrückrichtung in Eingriff und durch die axiale Verschiebung in Ausrückrichtung außer Eingriff mit der Innenverzahnung des Trommelrades bringbar ist. Außerdem betrifft die Erfindung ein Verfahren zum Ein- bzw. Ausrücken einer Versteckvorrichtung einer solchen Trommelfördermaschine gemäß dem Oberbegriff des Anspruchs 12 bzw. 13.

Bei einer Trommelfördermaschine wird als Seilträger eine Seiltrommel verwendet, auf der das Förderseil auf- oder abgewickelt wird. Man unterscheidet Einzeltrommelmaschinen und Doppeltrommelmaschinen. Doppeltrommelmaschinen können beispielsweise als Blairmaschinen oder Bobinen ausgeführt werden. Doppeltrommelmaschinen gibt es sowohl mit einer Festtrommel und einer Lostrommel, als auch mit zwei Lostrommeln. Dabei werden die Lostrommeln über eine schaltbare Kupplung, die Versteckvorrichtung, lösbar mit der Hauptwelle verbunden. Für jede Lostrommel der Trommelfördermaschine ist es erforderlich, dass zum Verstecken eine separate Bremse für die Lostrommel vorhanden ist.

Die Wickelrichtung des Seils auf den Trommeln der Doppeltrommelmaschine ist gegenläufig, so dass bei gleicher Drehrichtung der Hauptwelle das Seil der einen Trommel aufgewickelt und das andere abgewickelt wird.

Mit Hilfe der Versteckvorrichtung können beide Trommeln relativ zueinander in Umfangsrichtung versetzt werden. Hierzu wird die Lostrommel mit der ihr zugeordneten Bremse blockiert und von der weiteren Trommel, insbesondere einer Festtrommel, abgekuppelt. Dadurch dreht sich die Lostrommel beim Positionieren des zweiten Fördermittels mit Hilfe der weiteren Trommel nicht mit. Nachdem das zweite Fördermittel an der gewünschten Stelle positioniert ist, wird die Lostrommel wieder mit der Antriebswelle gekuppelt und die Bremse gelöst. Doppeltrommelfördermaschinen mit Versteckvorrichtungen ermöglichen daher die Förderung aus unterschiedlichen Tiefen, so dass beispielsweise ein Fördermittel unter Tage beladen, während gleichzeitig das andere über Tage entladen wird. Diese Funktion ist insbesondere beim Abteufen eines Schachtes wichtig, da sich hier die Teufe des Schachtes permanent ändert, um beispielsweise Abraum zu fördern oder während des Abteufens im Schacht Arbeiten zu verrichten. Dabei wird besonderer Wert auf einen schnellen Versteckvorgang mit hoher Sicherheit in Funktion, Betrieb sowie Verfügbarkeit gelegt.

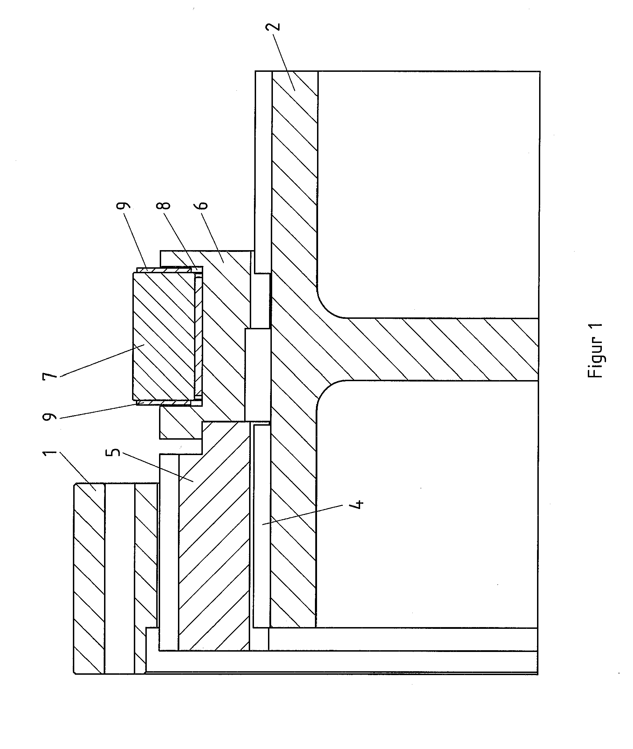

Der Stand der Technik einer Versteckvorrichtung für eine von der Firma Gutehoffnungshütte, Aktienverein für Bergbau und Hüttenbetrieb (kurz GHH) gelieferte Trommelmaschine aus dem Jahr 1987 wird anhand des Teilschnitts durch eine Versteckvorrichtung anhand von **Figur 1** näher erläutert. (Die in der Beschreibung des Standes der Technik vorkommenden Bezugszeichen beziehen sich ausschließlich auf Figur 1.) Ein innen verzahntes Trommelrad (1) ist mit einem nicht dargestellten Seitenschild einer nicht dargestellten Lostrommel verschraubt. Ein Wellenrad (2) ist, wie auch die nicht dargestellte Festtrommel, über Flansche drehfest mit der nicht dargestellten Hauptwelle verschraubt. Auf der Außenverzahnung (4) des Wellenrades (2) sind axial verschiebbar ein Kuppelrad (5), ein Schiebering (6) und ein als Schaltring (7) ausgeführtes Schaltglied angeordnet. Der Schaltring (7) ist gestellfest auf mit dem Fundament der Doppeltrommelmaschine verbundenen Konsolen für die nicht dargestellten hydraulischen Verschiebezylinder verbunden. Der Schaltring (7) gleitet in einer umlaufenden Nut (8) des Schieberings (6), während sich die nicht dargestellte Lostrommel im eingekuppelten Zustand der Versteckvorrichtung dreht. Das Ein- und Ausrücken der Versteckvorrichtung erfolgt im durch Bremsen gesicherten Stillstand der Doppeltrommelmaschine. Dabei sichern die hydraulischen Verschiebezylinder die Position des axial in der Einrück- und Ausrückrichtung auf der Außenverzahnung (4) des Wellenrades (3) verschiebbaren Kuppelrades (5).

Im Betrieb der bekannten Versteckvorrichtung für eine Doppeltrommelfördermaschine ist bei dem Großteil der Doppeltrommelfördermaschinen das Problem aufgetreten, dass sich das Kuppelrad (5) während der Drehung und Förderung mit der Lostrommel in Ausrückrichtung bewegte, wodurch auf die hydraulischen Verschiebezylinder und auf den stirnseitig mit Gleitmetall (9) versehenen Schaltring (7) erhebliche Kräfte ausgeübt wurden. In folge dessen versagte durch Überhitzung die Fettschmierung zwischen der Nut (8) des Schieberings (6) und dem Gleitmetall (9) und anschließend schmolz das Gleitmetall (9). Der Grund für dieses Ausrücken des Kuppelrades (5) unter Last der Lostrommel bei diesen Doppeltrommelfördermaschinen konnte nie ermittelt werden. Ein möglicher Erklärungsansatz waren Walkbewegungen des Seitenschildes an dem Trommelrad.

Um die Bewegung in Ausrückrichtung unter Last der Lostrommel zu vermeiden, wurden nachträglich Schrauben oder Bolzen auf dem Wellenrad (2) montiert, die eine axiale Verschiebung des Kuppelrades verhinderten. Der Versteckvorgang erfordert daher, dass ein Schlosser die nachträglich montierten Schrauben oder Bolzen zunächst aufwendig entfernt, und endet damit, dass der Schlosser die Elemente anschließend wieder anbringt. Derartige Montageschritte sind für den Betrieb einer Trommelfördermaschine mit Versteckvorrichtung insbesondere im Teufbetreib mit häufigen Versteckvorgängen nicht akzeptabel.

Die DE 922 194 B offenbart eine Trommelfördermaschine mit einer Versteckvorrichtung, bei der eine mit einer Bremse versehene Lostrommel mit einer angetriebenen Hauptwelle koppelbar ist. Auf einem genuteten Teil der Antriebswelle ist eine Verschiebemuffe mit einer Außenverzahnung als Kuppeleinrichtung angebracht. Die Außenverzahnung kann durch Verschiebung der Verschiebmuffe in Achsrichtung der Antriebswelle mit einer Innenverzahnung eines drehfest mit der Lostrommel verbundenen Zwischenteils in und außer Eingriff gebracht werden. Die Verschiebung der Verschiebmuffe erfolgt mit einer an der Trommelwelle angebauten Bewegungseinrichtung.

Ausgehend von diesem Stand der Technik liegt der Erfindung daher die Aufgabe zu Grunde, eine Trommelfördermaschine zu schaffen, deren Versteckvorrichtung ohne Montage zusätzlicher Elemente wirksam ein ungewolltes Ausrücken des Kuppelrades der Versteckvorrichtung, insbesondere unter Last der Lostrommel, verhindert.

Diese Aufgabe wird mit einer Vorrichtung gemäß den Merkmalen des Anspruchs 1 sowie mit einem Verfahren gemäß den Merkmalen des Anspruchs 12 bzw. 13 gelöst.

Die Lösung dieser Aufgabe macht sich den Umstand zu nutze, dass obwohl der Antrieb der Trommelfördermaschine rechts- oder linksdrehende Momente aufbringen muss, sich die Richtung des von jeder einzelnen Trommel auf die Hauptwelle aufgebrauchten Drehmomentes nicht ändert, wohl aber die Höhe abhängig von der Teufe und Beladung. Im Einzelnen wird die Aufgabe bei einer Trommelfördermaschine der eingangs erwähnten Art dadurch gelöst, dass an dem Kuppelrad mindestens ein Sperrkörper befestigt ist, die Zähne der Innenverzahnung des Trommelrades eine in Umfangsrichtung des Trommelrades verlaufende Nut zur Aufnahme des Sperrkörpers aufweisen, zwischen den Zähnen der Innenverzahnung des Trommelrades und den Zähnen der Außenverzahnung des Kuppelrades ein Spiel besteht, so dass durch Verdrehen des eingerückten Kuppelrades gegenüber dem Trommelrad um den Betrag des Spiels jeder Sperrkörper in eine der Nuten in - und außer Eingriff bringbar ist.

Das von der Lostrommel auf die Hauptwelle übertragene Drehmoment hält die Sperrkörper des eingerückten Kuppelrades sicher in ihrer in der Nut eingerasteten Position. Das Spiel zwischen den Zähnen der Innenverzahnung des Trommelrades und den Zähnen der Außenverzahnung des Kuppelrades wird dadurch hervorgerufen, dass bei der Innenverzahnung des Trommelrades die Zahnflanken einseitig in Umfangsrichtung verschoben sind. Hierdurch entsteht zu den Zähnen der Außenverzahnung des Kuppelrades ein ausreichendes Spiel, so dass durch Verdrehen des eingerückten Kuppelrades gegenüber dem Trommelrad um den Betrag des Spiels jeder Sperrkörper in eine der Nuten In- und Außereingriff bringbar ist.

Die in die Nuten in Eingriff bringbaren Sperrkörper verhindern wirksam ein Verschieben des Kuppelrades axial in beide Richtungen. Damit wird nicht nur der bisher beobachtete Effekt eines ungewollten Ausrückens des Kuppelrades verhindert, sondern auch eine ungewollte gegenläufige Bewegung des Kuppelrades in Einrückrichtung. Dies würde in gleicher Weise das Fett verbrennen und das Gleitmetall zum Schmelzen bringen.

Der Sperrkörper ist insbesondere an der in Einrückrichtung des Kuppelrades hinteren Stirnseite von einem der Zähne der Außenverzahnung des Kuppelrades angeordnet. Die Anordnung des Sperrkörpers an der Stirnseite erlaubt eine Nachrüstung bestehender Trommelfördermaschinen mit der Versteckvorrichtung.

Jeder Sperrkörper ragt über eine der beiden Zahnflanken von einem der Zähne der Außenverzahnung des Kuppelrades hinaus, wobei es sich um die Zahnflanke handelt, die unter der Last des von der Lostrommel auf die Hauptwelle aufgebrachten Drehmomentes an einer Zahnflanke des Trommelrades anliegt. Anstelle an der Stirnseite kann der Sperrkörper auch an der Zahnflanke selbst angeordnet sein und sich von der Oberfläche der Zahnflanke in den Zahnzwischenraum erstrecken.

Über den Umfang des Kuppelrades sind abhängig von der Zähnezahl und Last vorzugsweise mehrere Sperrkörper an den Stirnseiten der Zähne der Außenverzahnung des Kuppelrades angeschraubt.

Der Sperrkörper ist insbesondere als Platte ausgeführt und steht in Umfangsrichtung etwas über die Zahnflanke über. Durch Verdrehen des Kuppelrades rastet er in die vorgesehene Nut ein.

Um den Verschiebeweg des Kuppelrades in Einrückrichtung zu begrenzen, weist die Trommelfördermaschine mindestens einen Anschlag auf. Der Anschlag wird so positioniert, dass beim Anschlagen des Kuppelrades jeder Sperrkörper in Verlängerung einer der in Umfangsrichtung verlaufenden Nuten liegt. Konstruktiv vorteilhaft ist der Anschlag an dem Kuppelrad befestigt und weist eine Anschlagfläche für einen Zahn der Innenverzahnung des Trommelrades auf.

In besonders vorteilhafter Ausgestaltung der Erfindung sind der Anschlag und mindestens ein Sperrkörper, vorzugsweise jedoch zwei Sperrkörper einstückig zu einer Sperrklinke miteinander verbunden. Die Sperrklinken sind vorzugsweise so ausgebildet, dass sie ohne Änderung der Konstruktion auch so montiert werden können, dass die Sperrkörper auch bei anderer Drehrichtung des Trommelrades einrasten. Die Versteckvorrichtung ist, sofern derartige Sperrklinken verwendet werden, für beide Momentenrichtungen konzipiert. Das vermeidet Fehler in der Herstellung und macht die Bauteile unabhängig von der Richtung des Drehmomentes einer Trommel.

Eine automatische präzise Positionierung des Sperrkörpers in Verlängerung der Nut wird erreicht, wenn eine Seitenwand der Nut mit der Anschlagfläche des Anschlags zusammenwirkt. Dieses Zusammenwirken wird vorzugsweise dadurch bewirkt, dass ein bei eingerücktem Kuppelrad überstehender Teil jedes Zahns der Innenverzahnung des Trommelrades ein geringere Zahnhöhe aufweist als der in Eingriff stehende Teil jedes Zahns der Innenverzahnung des Trommelrades, in dem überstehenden Teil die Nut verläuft und die Zahnhöhe des überstehenden Teils so bestimmt ist, dass bei axialer Verschiebung des Kuppelrades in Einrückrichtung ausschließlich die Stirnseite des in Eingriff stehenden Teils des Zahns an der Anschlagfläche zur Anlage gelangt.

Um den Sperrkörper in Position zu halten und die Kräfte aufzunehmen, wenn die Hydraulikzylinder mit voller Last den Anschlag gegen die Zähne des Trommelrades fahren, ist der Sperrkörper in vorteilhafter Ausgestaltung der Erfindung mit einem an dem Kuppelrad befestigten Verstärkungselement verbunden. Zwischen dem Verstärkungselement und dem Sperrkörper kann darüber hinaus ein Füllstück angeordnet sein, um die Distanz zum Verstärkungselement zu überbrücken. Das Füllstück und das Verstärkungselement können auch einteilig ausgeführt sein.

Um eine gute Führung des Kuppelrades bei der axialen Verschiebung zu erreichen, ist nicht nur das Kuppelrad, sondern darüber hinaus der Schiebering innen verzahnt. Die Länge der Verzahnung von Kuppelrad und Schiebering gewährleisten, dass eine sichere axiale Führung ohne Verklemmen stattfindet.

Kuppelrad und Schiebering sind aus produktionstechnischen Gründen vorzugsweise als separate Bauteile ausgeführt, die drehfest miteinander verbunden sind. Das Kuppelrad und der Schiebering können jedoch auch einteilig ausgeführt sein.

Die Innenverzahnungen von Kuppelrad und Schiebering sind im Interesse einer guten Führung vorzugsweise als Trapezverzahnung ausgeführt. Die Außenverzahnung des Kuppelrades sowie die mit dem Kuppelrad kämmende Innenverzahnung des Trommelrades sind vorzugsweise als Evolventenverzahnung ausgeführt.

Um den Schiebering sowie das damit verbundene Kuppelrad in Einrück- bzw. Ausrückrichtung mit Hilfe des Schaltgliedes bewegen zu können, ist der Schiebering in vorteilhafter Ausgestaltung der Erfindung mit einem ringförmigen Bund versehen, der drehfest mit dem Schiebering verbunden ist. Das Schaltglied umfasst mindestens einen, vorzugsweise zwei Hydraulikzylinder, deren Kolbenstange jeweils endseitig mit einer den Bund umgreifenden Klaue versehen ist. Um die Klauen zu führen und zu positionieren, sind diese vorzugsweise über ein Rahmenelement miteinander verbunden. Das Rahmenelement kann insbesondere ringförmig ausgebildet sein, wobei der Ring mit dem das Kuppelrad umgebenden Bund fluchtet. Zwischen dem ringförmigen Rahmenelement und dem Bund sind vorzugsweise austauschbare Verschleißelemente angeordnet. Die Verzahnung des Wellenrades ist so lang ausgebildet, daß das Kuppelrad und der Schiebering ohne zu verklemmen auch mit nur einem Zylinder betrieben werden können. Dies ist wichtig, falls ein Zylinder schwergängig sein oder werden sollte.

Nachfolgend wird die Erfindung anhand der Figuren näher erläutert. Es zeigen:
- **Figur 2**: eine perspektivische Gesamtansicht einer Doppeltrommelfördermaschine mit einer Versteckvorrichtung,
- **Figur 3**: eine perspektivische Darstellung der Versteckvorrichtung,
- **Figur 4**: eine perspektivische Teildarstellung eines Trommel-, Kuppel- und Wellenrades der Versteckvorrichtung nach Figur 3,
- **Figuren 5 a-c**: die Versteckvorrichtung während des Einrückens des Kuppelrades,

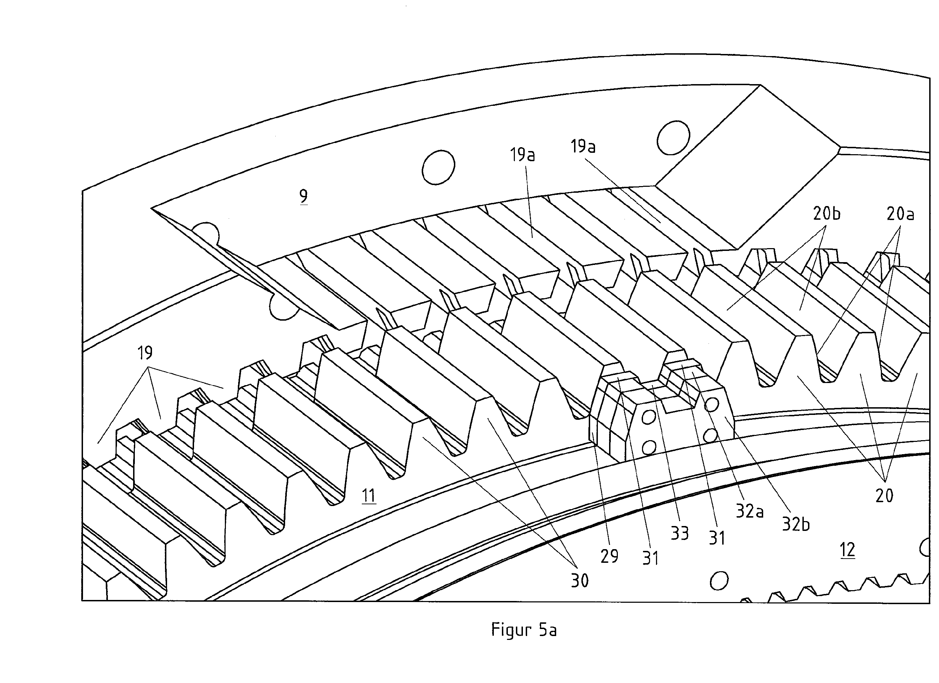

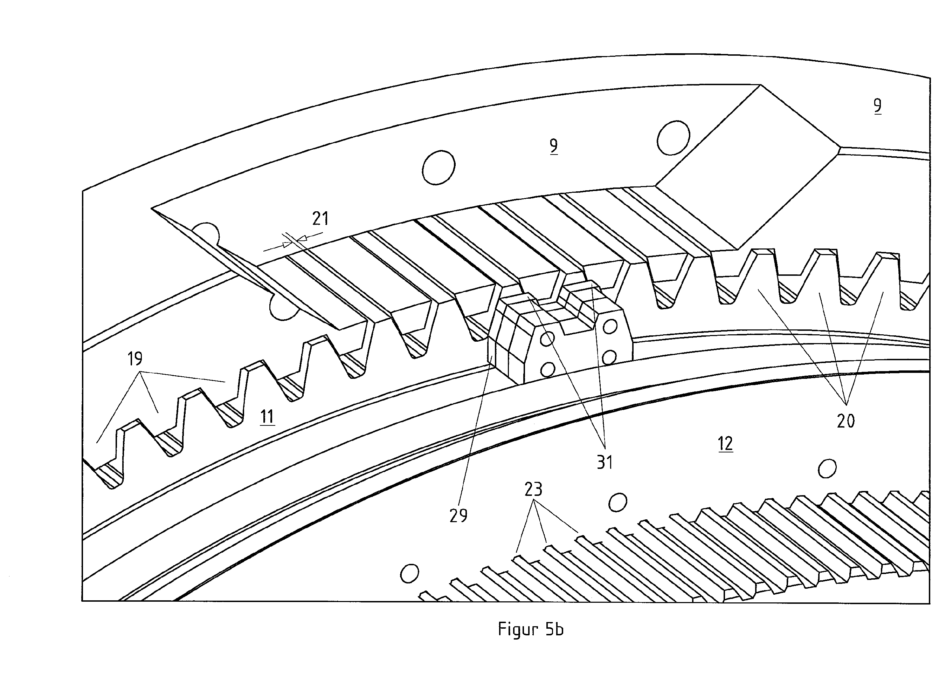

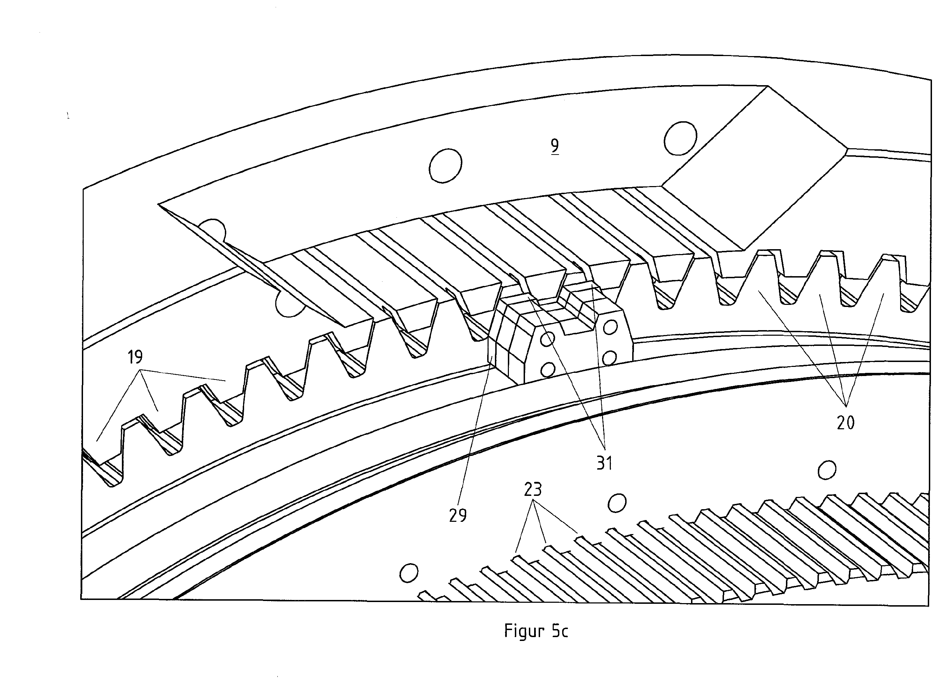

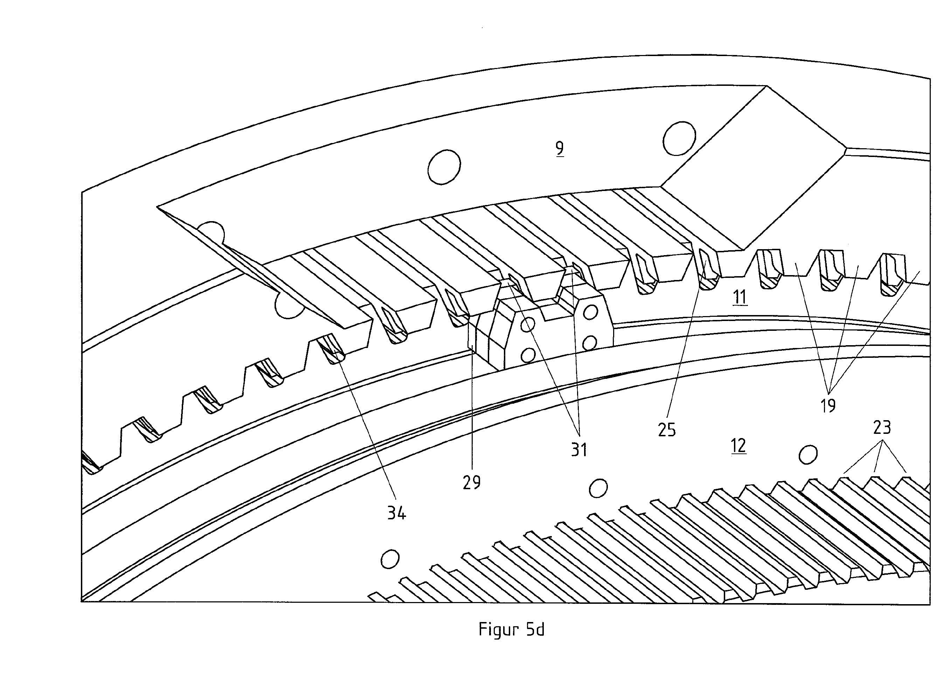

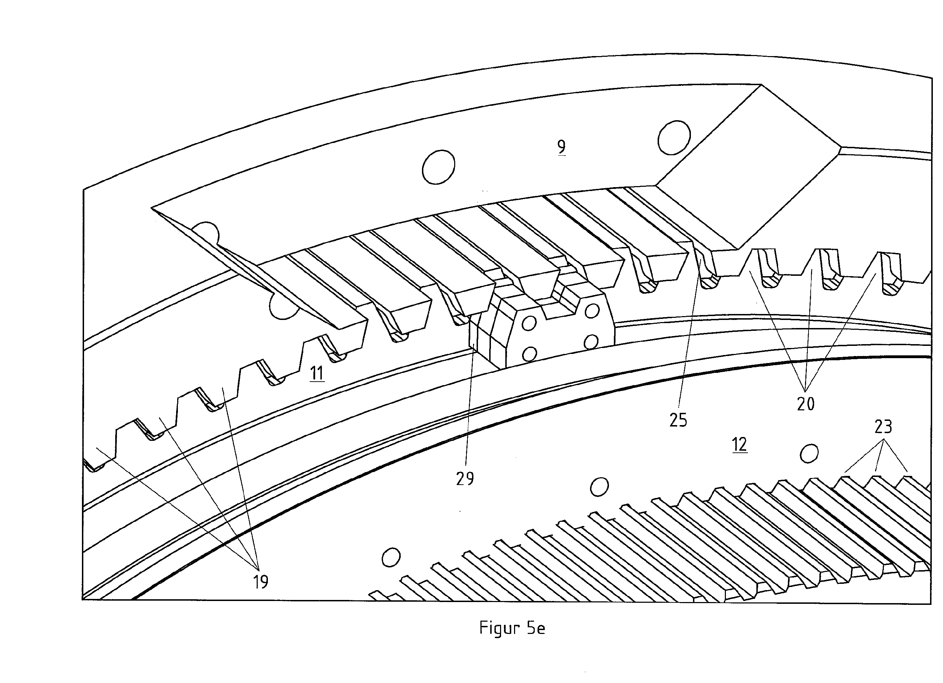

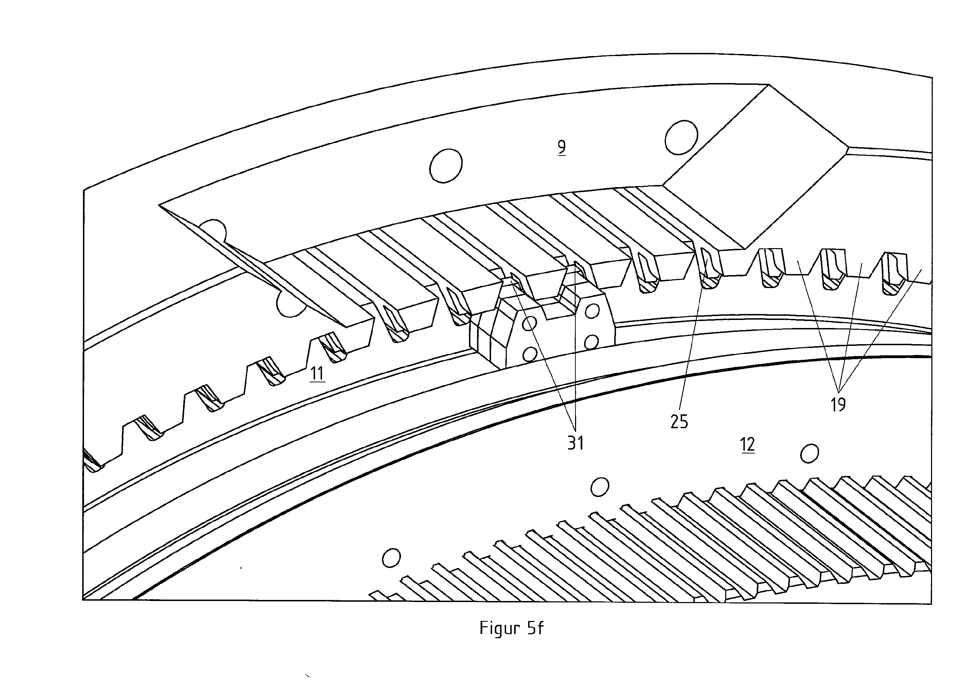

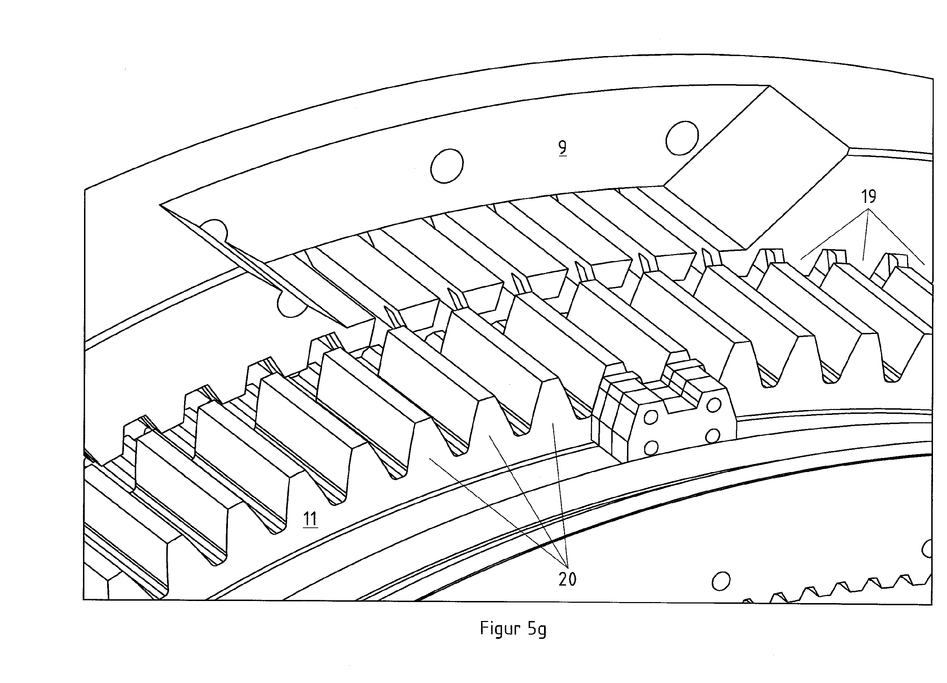

- **Figur 5 d**: die Versteckvorrichtung mit vollständig eingerücktem Kuppelrad,
- **Figur 5 e**: die Versteckvorrichtung mit vollständig eingerücktem Kuppelrad in verriegeltem Zustand,
- **Figur 5 f**: die Versteckvorrichtung mit vollständig eingerücktem Kuppelrad in entriegeltem Zustand,
- **Figur 5 g**: die Versteckvorrichtung mit vollständig ausgerücktem Kuppelrad,

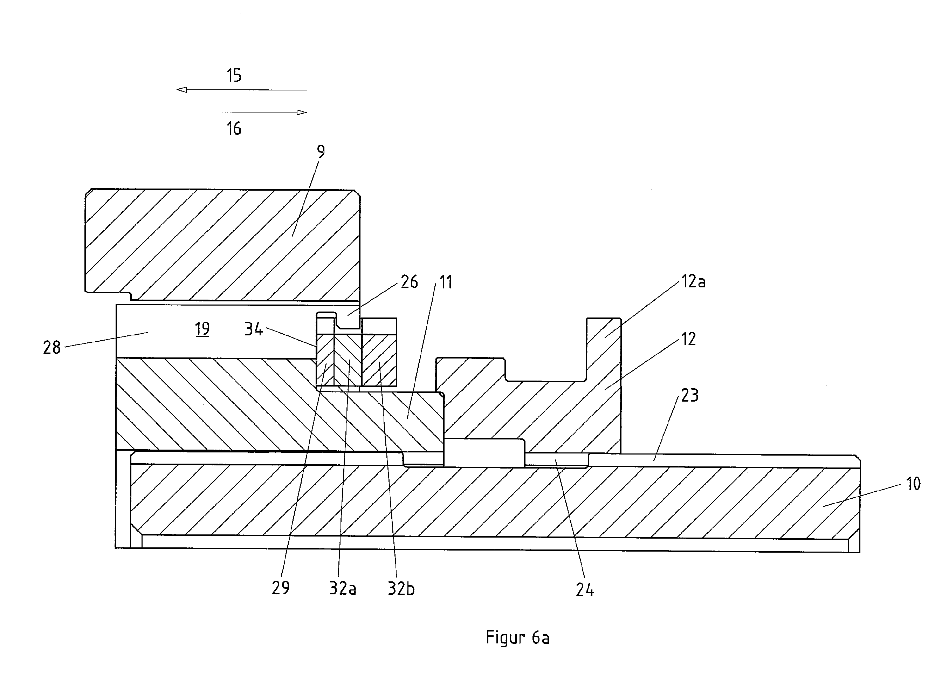

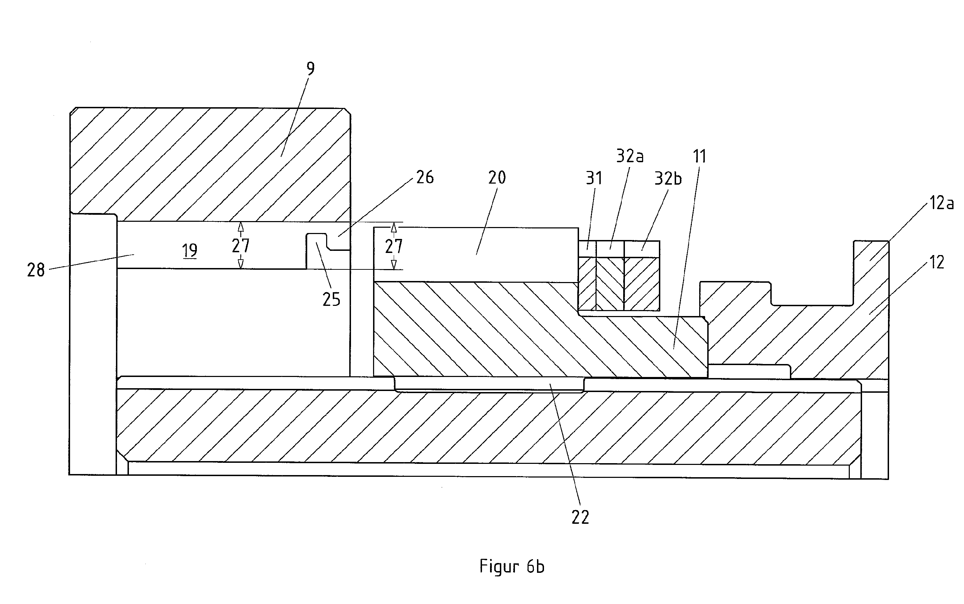

- **Figur 6 a**: einen Teilschnitt durch eine Versteckvorrichtung mit eingerücktem Kuppelrad sowie
- **Figur 6 b**: einen Teilschnitt durch eine Versteckvorrichtung mit ausgerücktem Kuppelrad.

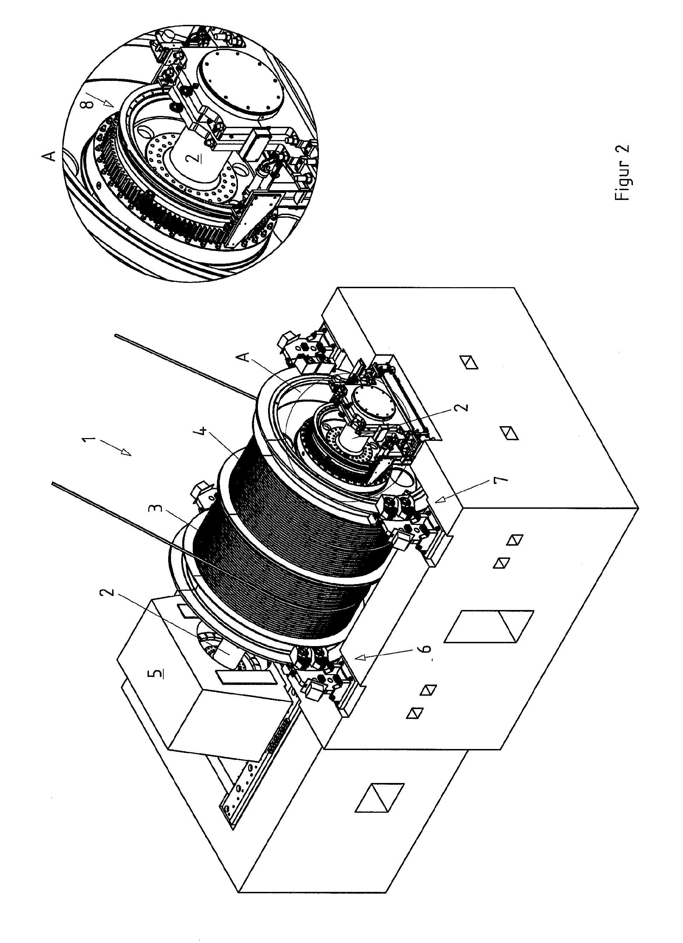

Figur 2 zeigt eine Trommelfördermaschine (1) mit einer auf einer Hauptwelle (2) angeordneten Festtrommel (3) und einer Lostrommel (4). Die Hauptwelle (2) wird von einem Antriebsmotor (5) angetrieben.

Sowohl die Festtrommel (3) als auch die Lostrommel (4) weisen jeweils eine Scheibenbremse (6,7) auf. Die Lostrommel (4) ist über eine Versteckvorrichtung (8) (vgl. Detail A) lösbar mit der Hauptwelle (2) verbunden.

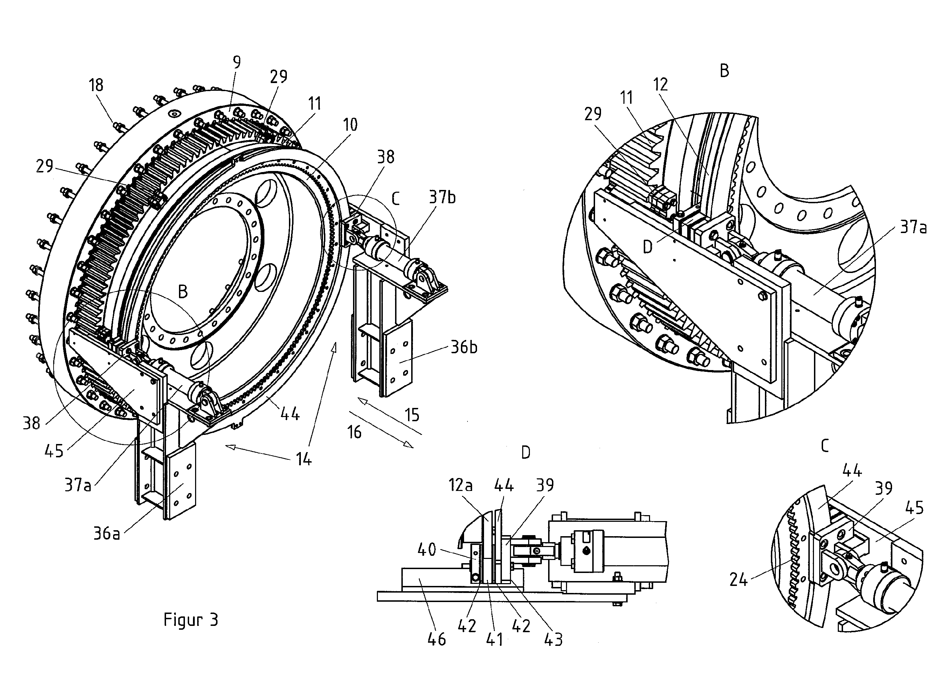

Die in Figur 3 vergrößert dargestellte Versteckvorrichtung (8) umfasst ein mit der Lostrommel (4) verschraubtes Trommelrad (9), ein mit der Hauptwelle (2) drehfest verbundenes Wellenrad (10) sowie ein in axialer Richtung verschiebbares Kuppelrad (11). Mit dem Kuppelrad (11) ist stirnseitig drehfest ein Schiebering (12) verbunden.

An der Trommelfördermaschine (1) ist gestellfest eine Schaltvorrichtung (14) zum Verschieben des Schieberings (12) in einer Einrückrichtung (15) und in einer Ausrückrichtung (16) angeordnet.

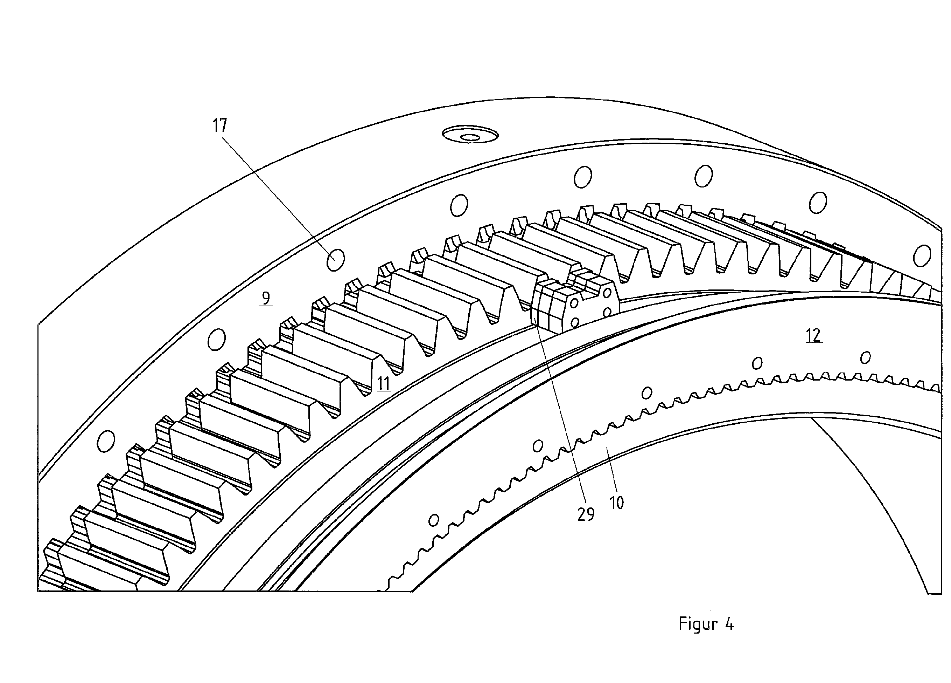

Aus Figur 3 in Verbindung mit Figur 4 ist erkennbar, dass das Trommelrad (9) durch über seinen Umfang gleichmäßig verteilte Durchgänge (17) mittels Schrauben (18) mit der Lostrommel (4) verschraubt ist.

Wie insbesondere aus den Figuren 6a, b erkennbar, weist das Trommelrad (9) eine Innenverzahnung (19) auf, die als Evolventenverzahnung ausgeführt ist. Eine der Zahnflanken (19a) sämtlicher Zähne der Innenverzahnung (19) ist auf dem Umfang verschoben, um ein ausreichendes Spiel (21) zwischen den Zähnen der Innenverzahnung (19) des Trommelrades (9) und den Zähnen einer Außenverzahnung (20) des Kuppelrades (11) zu schaffen. Dieses Spiel (21), wie es insbesondere aus den Figuren 5b, c erkennbar ist, ist für das Verriegeln der Versteckvorrichtung (8) erforderlich.

Die Außenverzahnung (20) des Kuppelrades (11) ist ebenfalls als Evolventenverzahnung ausgeführt. Das Kuppelrad (11) weist darüber hinaus eine Innenverzahnung (22) auf. Die Innenverzahnung (22) des Kuppelrades (11) ist axial in Einrück- und Ausrückrichtung (15,16) auf einer Außenverzahnung (23) des Wellenrades (10) verschiebbar. Die Verzahnungen von Kuppelrad (11) und Wellenrad (10) sind als Trapezverzahnungen ausgeführt. Das Kuppelrad (11) verbindet in dem in Figur 6a dargestellten, eingerückten Zustand, kraftschlüssig das Trommelrad (9) über das Wellenrad (10) mit der Hauptwelle (2).

Der Schiebering (12) weist ebenfalls eine Innenverzahnung (24) auf, die ebenfalls als Trapezverzahnung ausgeführt und axial in Einrück- und Ausrückrichtung (15,16) auf der Außenverzahnung (23) des Wellenrades (10) verschiebbar ist.

Das Wellenrad (10) sowie dessen Außenverzahnung (23) ist in Einrück- bzw. Ausrückrichtung (15,16) so lang, dass das Kuppelrad (11) mit dem Schiebering (12) bis zum vollständigen Ausrücken des Kuppelrades (11) geführt sind.

Die Zähne der Innenverzahnung (19) des Trommelrades (9) weisen sämtlich eine in Umfangsrichtung verlaufende Nut (25) auf, die sich zwischen den Zahnflanken (19a,b) jedes Zahnes erstreckt.

Jede Nut (25) wird seitlich einerseits durch ein bei eingerücktem Kuppelrad (11) überstehendes Teil (26) eines Zahns der Innenverzahnung (19) und andererseits ein in Eingriff stehendes Teil (28) eines Zahns der Innenverzahnung (19) begrenzt. Das überstehende Teil (26) weist eine Zahnhöhe (27) auf, die geringer ist als die Zahnhöhe (27) des in Eingriff stehenden Teils (28) des Zahns.

Wie insbesondere aus Figur 3 in Verbindung mit Figuren 5 a - g erkennbar sind am Umfang des Kuppelrades (11) mehrere Sperrklinken (29) an der in Einrückrichtung (15) des Kuppelrades (11) hinteren Stirnseite der Zähne der Außenverzahnung (20) angeschraubt. Jede Sperrklinke (29) weist zwei Sperrkörper (31) auf, die in Umfangsrichtung geringfügig über die Zahnflanken (20a) der Außenverzahnung (20) des Kuppelrades (11) hinausragen. Bei den Zahnflanken (20a) handelt es sich um die Zahnflanken, die unter der Last des von der Lostrommel (4) auf die Hauptwelle (2) aufgebrachten Drehmoments an den Zahnflanke (19a) des Trommelrades (9) anliegen. Zwischen den beiden Sperrkörpern (31) jeder Sperrklinke (29) erstreckt sich in Umfangsrichtung des Kuppelrades (11) ein einstückig mit den beiden Sperrkörpern (31) ausgebildeter Anschlag (33), gegen den nach vollständigem Einrücken des Kuppelrades (11) die Stirnseite (34) des in Eingriff stehenden Teils (28) eines Zahns der Innenverzahnung (19) des Trommelrades (9) zur Anlage gelangt (vgl. insbesondere Figur 6a). Die Zahnhöhe (27) des überstehenden Teils (26) ist dabei so bestimmt, dass bei axialer Verschiebung des Kuppelrades (11) in Einrückrichtung (15) ausschließlich die Stirnseite (34), nicht jedoch die Stirnseite des überstehenden Teils (26) an der Anschlagfläche (33) anstößt.

Jede Sperrklinke (29) wird von einem Füllstück (32a) und einem Verstärkungsriegel (32b) hinterlegt, die zusammen mit der Sperrklinke (29) an der hinteren Stirnseite (30)der Außenverzahnung (20) verschraubt werden. Das Füllstück (32a) spannt die Sperrklinke (29) fest, um Biegungen zu verhindern und überbrückt die Distanz zum Verstärkungsriegel (32b), der außerhalb der Innenverzahnung (19) des Trommelrades(9) bei voll eingerücktem Kuppelrad (11) liegt. Der Verstärkungsriegel (32b) hält die Sperrklinke (29) in Position und nimmt die Kräfte auf, wenn die Hydraulikzylinder (37a, b) mit voller Last an den Anschlag (33) fahren oder wenn sich das Kuppelrad (12) in Ausrückrichtung axial bewegen will. Der Verstärkungsriegel (32b) stellt sicher, dass jede Sperrklinke (29) und damit jeder in die Nut (25) eingreifende Sperrkörper (31) ausschließlich auf Scherung beansprucht wird.

Den Schiebering (12) umgibt ein ringförmiger Bund (12a) auf den die nachfolgend näher anhand der Figur 3 erläuterte Schaltvorrichtung (14) einwirkt. Die Schaltvorrichtung (14) umfasst zwei Konsolen (36a,b), die mit einem Fundament der Trommelfördermaschine (1) fest verbunden sind. An jeder Konsole (36a,b) ist jeweils ein Hydraulikzylinder (37a,b) mit einer den Bund (12a) des Schieberings (12) umgreifenden Klaue (38) gelenkig verbunden. Die Klaue (38) besteht aus einem Flanschblech (39) zur Anlenkung der Kolbenstange und einem im parallelen Abstand zu dem Flanschblech (39) angeordneten Gegenblech (40). Zwischen den beiden Blechen (39,40) befindet sich ein Schleißdistanzstück (41) als radialer Anschlag für den ringförmigen Bund (12a) sowie zwei an den Seitenrändern des ringförmigen Bundes (12a) anliegende Schleißplatten (42). Sowohl das Schleißdistanzstück (41) als auch die Schleißplatten (42) bestehen beispielsweise aus Messing.

Die Klaue (38) taucht seitlich in eine Nut (43) eines an einer Seitenwange (45) der Konsole (36a,b) in Ein- und Ausrückrichtung (15, 16) verschieblichen Führungselementes (46) ein. Um ein Auswandern der Klauen (38) zu verhindern, sind die beiden Klauen (38) über ein ringförmiges Rahmenelement (44) miteinander verbunden. Die Verbindung erfolgt mit Hilfe von Durchgangsschrauben, die das Flanschblech (39), das Gegenblech (40), das Schleißdistanzstück (41), die Schleißplatten (42) und das Rahmenelement (44) durchsetzen.

Nachfolgend wird die Betriebsweise der Versteckvorrichtung (8) der Trommelfördermaschine (1) anhand der Figuren 5a - 5g erläutert.

Figur 5a zeigt das von der Hauptwelle (2) entkoppelte Trommelrad (9), das über die Scheibenbremse (7) der Lostrommel (4) festgesetzt ist. Mit Hilfe des Antriebsmotors (5) werden die Zähne der Außenverzahnung (20) des Kuppelrades (11) fluchtend zu den Zahnzwischenräumen der Innenverzahnung (19) des Trommelrades (9) ausgerichtet, wie dies in Figur 5a erkennbar ist. Anschließend werden die Hydraulikzylinder (37a, b) der Schaltvorrichtung (14) beaufschlagt, so dass das Kuppelrad (11) axial in Einrückrichtung (15) verschoben wird, bis die Außenverzahnung (20) des Kuppelrades (11) vollständig in Eingriff mit der Innenverzahnung (19) des Trommelrades (9) steht, wie dies aus Figur 5d erkennbar ist. Zu diesem Zeitpunkt schlägt die Stirnseite (34) der Innenverzahnung (19) des Trommelrades (9) an dem Anschlag (33) der Sperrklinke (29) an, wodurch gewährleistet wird, dass jeder Sperrkörper (31) in Verlängerung einer der in Umfangsrichtung verlaufenden Nuten (25) liegt. Nunmehr wird die Scheibenbremse (7) der Lostrommel (4) gelöst, wodurch sich das Trommelrad (9) gegenüber dem Kuppelrad (11) im Gegenuhrzeigersinn aufgrund des von der Lostrommel (4) aufgebrachten Drehmomentes verdreht. Durch diese Verdrehung gelangt jeder Sperrkörper (31) in eine der Nuten (25) in den Zähnen der Innenverzahnung (19), wie in Figur 5e dargestellt.

Die derart mit der Versteckvorrichtung (8) gekuppelte Lostrommel (4) kann nunmehr über die Hauptwelle (2) zusammen mit der Festtrommel (3) in Drehung versetzt werden. Die Gefahr eines Wanderns des Kuppelrades (12) in oder entgegen der Ausrückrichtung wird durch die unabhängig von der Drehrichtung der Hauptwelle (2) in Eingriff befindlichen Sperrkörper (31) wirksam verhindert.

Soll nun die Lostrommel (4) ausgekuppelt werden, wird vor dem Auskuppeln des Kuppelrades (11) die Lostrommel (4) zunächst mit der Scheibenbremse (7) wieder festgesetzt. Durch Verdrehen des eingerückten Kuppelrades (11) gegenüber dem nunmehr festgesetzten Trommelrad (9) im Gegenuhrzeigersinn mit Hilfe des Antriebsmotors (5) um den Betrag des Spiels (21) wird jeder Sperrkörper (31) außer Eingriff gebracht, wie dies in Figur 5f erkennbar ist. Anschließend wird das Kuppelrad (11) mit Hilfe der beidseitig beaufschlagbaren Hydraulikzylinder(37a, b) soweit verschoben, bis die Außenverzahnung (20) des Kuppelrades (11) außer Eingriff mit der Innenverzahnung (19) des Trommelrades (9) steht. Sodann wird zum weiteren Betrieb ausschließlich der Festtrommel (3) die Hauptwelle (2) in Drehung versetzt, während die entkoppelte Lostrommel von der Bremseinrichtung (7) festgehalten wird.

**Bezugszeichenliste**

| **Nr.** | **Bezeichnung** | **Nr.** | **Bezeichnung** |
|---|---|---|---|
| 1 | Trommelfördermaschine | 29 | Sperrklinken |
| 2 | Hauptwelle | 30 | hintere Stirnseite Pos fehlt in Figuren |
| 3 | Festtrommel | 31 | Sperrkörper =29 ?? |
| 4 | Lostrommel | 32a | Füllstück |
| 5 | Antriebsmotor | 32b | Verstärkungsriegel |
| 6 | Scheibenbremse | 33 | Anschlag |
| 7 | Scheibenbremse | 34 | Stirnseite |
| 8 | Versteckvorrichtung | 35 | -- |
| 9 | Trommelrad | 36a,b | Konsole |
| 10 | Wellenrad | 37a,b | Hydraulikzylinder |
| 11 | Kuppelrad | 38 | Klaue |
| 12 | Schiebering | 39 | Flanschblech |
| 12a | ringförmiger Bund | 40 | Gegenblech |
| 13 | - | 41 | Schleißdistanzstück |
| 14 | Schaltvorrichtung | 42 | Schleißplatten |
| 15 | Einrückrichtung | 43 | Nut |
| 16 | Ausrückrichtung | 44 | Rahmenelement |
| 17 | Durchgänge | 45 | Seitenwange |
| 18 | Schrauben | 46 | Führungselement |
| 19 | Innenverzahnung (T9) | 47 | |
| 19a,b | Zahnflanke | | |
| 20 | Außenverzahnung (K11) | 48 | |
| 20a | Zahnflanke | | |
| 21 | Spiel | 49 | |
| 22 | Innenverzahnung (K11) | 50 | |
| 23 | Außenverzahnung (W11) | 51 | |
| 24 | Innenverzahnung (Sch12) | 52 | |
| 25 | Nut | 53 | |
| 26 | überstehendes Teil | 54 | |
| 27 | Zahnhöhe | 55 | |
| 28 | im Eingriff stehendes Teil | 56 | |

## Patentansprüche

1. Trommelfördermaschine (1) mit einer angetriebenen Hauptwelle (2), mindestens einer auf der Hauptwelle (2) angeordneten Lostrommel (4) mit einer Bremse (7), einer Versteckvorrichtung (8) zur lösbaren Verbindung von Lostrommel (4) und Hauptwelle (2), die
- ein mit der Lostrommel (4) drehfest verbundenes Trommelrad (9) mit einer Innenverzahnung (19),
- ein mit der Hauptwelle (2) drehfest verbundenes Wellenrad (10) mit einer Außenverzahnung (23),
- ein Kuppelrad (11) mit einer Außenverzahnung (20) und einer Innenverzahnung (22), die axial in einer Einrückrichtung (15) und einer Ausrückrichtung (16) auf der Außenverzahnung(23) des Wellenrades (10) verschiebbar ist,
- einen mit dem Kuppelrad (11) stirnseitig drehfest verbundenen Schiebering (12) und
- ein gestellfest an der Trommelfördermaschine (1) angeordnete Schaltvorrichtung (14) zum Verschieben des Schieberings (12) in Einrück- und Ausrückrichtung (15, 16),
aufweist, wobei die Außenverzahnung (20) des Kuppelrades (11) durch die axiale Verschiebung in Einrückrichtung (15) in Eingriff und durch die axiale Verschiebung in Ausrückrichtung (16) außer Eingriff mit der Innenverzahnung (19) des Trommelrades (9) bringbar ist, **dadurch gekennzeichnet, dass**
- an dem Kuppelrad (9) mindestens ein Sperrkörper (31) befestigt ist,
- die Zähne der Innenverzahnung (19) des Trommelrades (9) eine in Umfangsrichtung des Trommelrades (9) verlaufende Nut (25) zur Aufnahme des Sperrkörpers (31) aufweisen,
- zwischen den Zähnen der Innenverzahnung (19) des Trommelrades (9) und den Zähnen der Außenverzahnung (20) des Kuppelrades (11) ein Spiel (21) besteht, so dass durch Verdrehen des eingerückten Kuppelrades (11) gegenüber dem Trommelrad (9) um den Betrag des Spiels (21) jeder Sperrkörper (31) in eine der Nuten (25) in - und außer Eingriff bringbar ist.

2. Trommelfördermaschine nach Anspruch 1, **dadurch gekennzeichnet, dass** jeder Sperrkörper (31) an der in Einrückrichtung (15) des Kuppelrades (11) hinteren Stirnseite (30) von einem der Zähne der Außenverzahnung (20) des Kuppelrades (11) angeordnet ist.

3. Trommelfördermaschine nach Anspruch 1 oder 2, **dadurch gekennzeichnet, dass** jeder Sperrkörper (31) über eine der beiden Zahnflanken (20a,b) von einem der Zähne der Außenverzahnung (20) des Kuppelrades (11) hinausragt, wobei es sich um die Zahnflanke (20a) handelt, die unter der Last des von der Lostrommel (4) auf die Hauptwelle (2) aufgebrachten Drehmomentes an einer Zahnflanke (19a) des Trommelrades (9) anliegt.

4. Trommelfördermaschine nach einem der Ansprüche 1 bis 3, **dadurch gekennzeichnet, dass** die Trommelfördermaschine (1) mindestens einen Anschlag (33) aufweist, der die axiale Verschieblichkeit des Kuppelrades (11) in Einrückrichtung (15) begrenzt.

5. Trommelfördermaschine nach Anspruch 4, **dadurch gekennzeichnet, dass** der Anschlag (33) an dem Kuppelrad (11) befestigt ist und eine Anschlagfläche für einen Zahn der Innenverzahnung (19) des Trommelrades (9) aufweist.

6. Trommelfördermaschine nach Anspruch 4 oder 5, **dadurch gekennzeichnet, dass** mindestens ein Anschlag (33) und mindestens ein Sperrkörper (31) einstückig ausgebildet sind.

7. Trommelfördermaschine nach einem der Ansprüche 4 bis 6, **dadurch gekennzeichnet, dass**
- ein bei eingerücktem Kuppelrad (11) überstehendes Teil (26) jedes Zahns der Innenverzahnung (19) des Trommelrades (9) ein geringere Zahnhöhe (27) aufweist, als der in Eingriff stehende Teil (28) jedes Zahns der Innenverzahnung (19) des Trommelrades (9),
- zwischen dem überstehenden Teil (26) und dem in Eingriff stehenden Teil (28) die Nut (25) verläuft und
- die Zahnhöhe (27) des überstehenden Teils (26) so bestimmt ist, dass bei axialer Verschiebung des Kuppelrades (11) in Einrückrichtung (15) ausschließlich die Stirnseite (34) des in Eingriff stehenden Teils (28) des Zahns an dem Anschlag (33) zur Anlage gelangt.

8. Trommelfördermaschine nach einem der Ansprüche 1 bis 7, **dadurch gekennzeichnet, dass** der Sperrkörper (31) mit einem an dem Kuppelrad (11) befestigten Verstärkungselement (32b) verbunden ist.

9. Trommelfördermaschine nach einem der Ansprüche 1 bis 8, **dadurch gekennzeichnet, dass** der Schiebering(12) eine Innenverzahnung (24) aufweist, die axial in Einrück- und Ausrückrichtung (15, 16) auf der Außenverzahnung (23) des Wellenrades (10) verschiebbar ist.

10. Trommelfördermaschine nach einem der Ansprüche 1 bis 9, **dadurch gekennzeichnet, dass** den Schiebering (12) ein ringförmiger Bund (12a) umgibt, der drehfest mit dem Schiebring (12) verbunden ist und die Schaltvorrichtung (14) zum Verschieben des Schieberings (12) mindestens einen Hydraulikzylinder (37a, b) umfasst, deren Kolbenstangen jeweils endseitig mit einer den Bund (12a) umgreifenden Klaue (38) versehen sind.

11. Trommelfördermaschine nach Anspruch 10, **dadurch gekennzeichnet, dass** die Klauen (38) durch ein Rahmenelement (44) miteinander verbunden sind.

12. Verfahren zum Ausrücken einer Versteckvorrichtung einer Trommelfördermaschine nach Anspruch 1, **dadurch gekennzeichnet, dass**
- vor dem Ausrücken des Kuppelrades (11) die Lostrommel (4) mit einer Bremse (7) festgesetzt wird,
- durch Verdrehen des eingerückten Kuppelrades (11) gegenüber dem festgesetzten Trommelrad (9) in Richtung des von der Lostrommel (4) auf die Hauptwelle (2) aufgebrachten Drehmomentes um den Betrag des Spiels (21) jeder Sperrkörper (31) außer Eingriff gebracht wird,
- anschließend das Kuppelrad (11) mit Hilfe der Schaltvorrichtung (14) so weit axial in Ausrückrichtung (16) verschoben wird, bis die Außenverzahnung (20) des Kuppelrades (11) außer Eingriff mit der Innenverzahnung (19) des Trommelrades (9) steht und
- sodann zum weiteren Betrieb die Hauptwelle (2) in Drehung versetzt wird.

13. Verfahren zum Einrücken einer Versteckvorrichtung einer Trommelfördermaschine nach Anspruch 1, **dadurch gekennzeichnet, dass**
- vor dem Einrücken des Kuppelrades (11) die Lostrommel (4) mit einer Bremse (7) festgesetzt wird,
- die Zähne der Außenverzahnung (20) des Kuppelrades (11) fluchtend zu den Zahnzwischenräumen der Innenverzahnung (19) des Trommelrades (9) ausgerichtet werden,
- anschließend das Kuppelrad (11) mit Hilfe der Schaltvorrichtung (14) so weit axial in Einrückrichtung (15) verschoben wird, bis die Außenverzahnung (20) des Kuppelrades (11) in Eingriff mit der Innenverzahnung (19) des Trommelrades (9) steht und jeder Sperrkörper (31) in Verlängerung einer der in Umfangsrichtung verlaufenden Nuten (25) liegt,
- das Trommelrad (9) gegenüber dem Kuppelrad (11) in Richtung des von der Lostrommel (4) auf die Hauptwelle (2) aufgebrachten Drehmomentes um den Betrag des Spiels verdreht wird, wobei jeder Sperrkörper in einer der Nuten in Eingriff gebracht wird und
- zum weiteren Betrieb die Hauptwelle in Drehung versetzt wird.

## Claims

1. A drum hoist (1), comprising a driven main shaft (2) at least one loose drum (4) arranged on said main shaft (2) with a brake (7), a coupling apparatus (8) for releasably connecting loose drum (4) and main shaft (2), the coupling apparatus comprising:
- a drum wheel (9) with an internal toothed structure (19), which is connected in a torque-proof manner to said loose drum (4),
- a shaft wheel (10) with an external toothed structure (23), which is connected in a torque-proof manner to said main shaft (2),
- a coupler wheel (11) with an external toothed structure (20) and an internal toothed structure (22), which is axially displaceable in an engagement direction (15) and a disengagement direction (16) on said external toothed structure (23) of said shaft wheel (10),
- a sliding ring (12) connected on an end side in a torque-proof manner to said coupler wheel (11) and
- a switching apparatus 14) arranged fixedly on a frame of said drum hoist (1) for displacing said sliding ring (12) in the engagement and disengagement direction (15, 16),
wherein said external toothed structure (20) of said coupler wheel (11) can be brought into engagement with said internal toothed structure (19) of said drum wheel (9) by axial displacement in the engagement direction and can be brought out of engagement by axial displacement in the disengagement direction (16), **characterized in that**
- at least one locking body (31) is fastened to said coupler wheel (9),
- the teeth of said internal toothed structure (19) of said drum wheel (9) have a groove (25) for receiving said locking body (31), said groove extending in a circumferential direction of said drum wheel (9),
- there is a backlash (21) between the teeth of said internal toothed structure (19) of said drum wheel (9) and the teeth of said external toothed structure (20) of said coupler wheel (11), so that each locking body (31) can be brought into and out of engagement with one of said grooves (25) by rotation of said engaged coupler wheel (11) with respect to said drum wheel (9) by the amount of the backlash (21).

2. The drum hoist according to claim 1, **characterized in that** each locking body (31) is arranged on the rear end side (30) in the engagement direction (15) of said coupler wheel (11) of one of the teeth of said external toothed structure (20) of said coupler wheel (11).

3. The drum hoist according to claim 1 or 2, **characterized in that** said locking body (31) protrudes beyond one of two tooth flanks (20a, b) of one of the teeth of said external toothed structure (20) of said coupler wheel (11), where this comprises the tooth flank (20a) which bears against a tooth flank (19a) of said drum wheel (9) under the load of the torque which is applied to said main shaft (2) by said loose drum (4).

4. The drum hoist according to any one of claims 1 to 3, **characterized in that** the drum hoist (1) comprises at least one stop (33) which limits the axial displaceability of said coupler wheel (11) in the engagement direction (15).

5. The drum hoist according to claim 4, **characterized in that** said stop (33) is fastened to said coupler wheel (11) and has a stop face for a tooth of the internal toothed structure (19) of said drum wheel (9).

6. The drum hoist according to claim 4 or 5, **characterized in that** at least one stop (33) and at least one locking body (31) are configured in a single piece.

7. The drum hoist according to any one of claims 4 to 6, **characterized in that**
- a part (26) of each tooth of said internal toothed structure (19) of said drum wheel (9) that protrudes when said coupler wheel (11) is engaged has a lower tooth height (27) than the part (28) of each tooth of the internal toothed structure (19) of the drum wheel (9) which is in engagement,
- said groove (25) runs between said protruding part (26) and said part (28) which is in engagement and
- the tooth height (27) of said protruding part (26) is defined such that, during an axial displacement of said coupler wheel (11) in the engagement direction (15), exclusively the end side (34) of said part (28) of said tooth which is in engagement comes to abut against stop (33).

8. The drum hoist according to any one of claims 1 to 7, **characterized in that** said locking body (31) is connected to a reinforcing element (32b) fastened to said coupler wheel (11).

9. The drum hoist according to any one of claims 1 to 8, **characterized in that** said sliding ring (12) has an internal toothed structure (24) which can be displaced axially in the engagement and disengagement direction (15, 16) on said external toothed structure (23) of said shaft wheel (10).

10. The drum hoist according to any one of claims 1 to 9, **characterized in that** an annular collar (12a) surrounds said sliding ring (12) which is connected in a torque-proof manner to said sliding ring (12) and said switching apparatus (14) comprises at least one hydraulic cylinder (37a, b) for displacing said sliding ring (12), the piston rods of which are provided on an end side with a claw (38) which reaches around said annular collar (12a).

11. The drum hoist according to claim 10, **characterized in that** said claws (38) are connected to one another by a frame element (44).

12. A method for disengaging a coupling apparatus of a drum hoist according to claim 1, **characterized in that**:
- the loose drum (4) is fixed using a brake (7) before the disengagement of the coupler wheel (11),
- each locking body (31) is brought out of engagement by rotation of the engaged coupler wheel (11) with respect to the fixed drum wheel (9) by the amount of the backlash (21) in the direction of the torque which is applied to the main shaft (2) by the loose drum (4),
- then the coupler wheel (11) is displaced axially in the disengagement direction (16) using the switching apparatus (14), until the external toothed structure (20) of the coupler wheel (11) is out of engagement with the internal toothed structure (19) of the drum wheel (9), and
- then the main shaft (2) is set in rotation for further operation.

13. A method for engaging the coupling apparatus of the drum hoist according to claim 1, **characterized in that**
- the loose drum (4) is fixed by means of a brake (7) before the engagement of the coupler wheel (11),
- the teeth of the external toothed structure (20) of the coupler wheel (11) are aligned flush with the tooth intermediate spaces of the internal toothed structure (19) of the drum wheel (9),
- the coupler wheel (11) is then displaced axially in the engagement direction (15) using the switching apparatus (14) until the external toothed structure (20) of the coupler wheel (11) is in engagement with the internal toothed structure (19) of the drum wheel (9) and each locking body (31) lies in an extension of one of the grooves (25) running in the circumferential direction,
- the drum wheel (9) is rotated with respect to the coupler wheel (11) by the amount of the backlash in the direction of the torque which is applied to the main shaft (2) by the loose drum (4) wherein each locking body is brought into engagement with one of the grooves, and
- the main shaft is set in rotation for further operation.

## Revendications

1. Machine d'extraction à tambour (1), avec un arbre principal (2) entraîné, au moins un tambour (4) amovible placé sur l'arbre principal (2), avec un frein (7), un dispositif d'enfichage (8) pour la liaison amovible du tambour (4) amovible et de l'arbre principal (2), qui comporte
- une roue de tambour (9) reliée de manière solidaire en rotation avec le tambour (4) amovible, avec une denture intérieure (19),
- un volant (10) relié de manière solidaire en rotation avec l'arbre principal (2), avec une denture extérieure (23),
- une roue couplée (11) avec une denture extérieure (20) et une denture intérieure (22) qui est déplaçable en direction axiale dans une direction d'accouplement (15) et dans une direction de désaccouplement (16) sur la denture extérieure (23) du volant (10),
- une bague coulissante (12) reliée côté frontal de manière solidaire en rotation avec la roue couplée (11) et
- un dispositif de commutation (14) placé de manière fixe au bâti sur la machine d'extraction à tambour (1), pour le déplacement de la bague coulissante (12) en direction d'accouplement et de désaccouplement (15, 16),
par le déplacement axial en direction d'accouplement (15), la denture extérieure (20) de la roue couplée (11) pouvant être amenée en engagement et par le déplacement axial en direction de désaccouplement (16), pouvant être amenée hors engagement avec la denture intérieure (19) de la roue de tambour (9),
**caractérisée en ce que**
- sur la roue couplée (9) est fixé au moins un organe de blocage (31),
- les dents de la denture intérieure (19) de la roue de tambour (9) comportent une rainure (25) s'étendant en direction périphérique de la roue de tambour (9), pour le logement de l'organe de blocage (31),
- entre les dents de la denture intérieure (19) de la roue de tambour (9) et les dents de la denture extérieure (20) de la roue couplée (11), il existe un jeu (21), de sorte qu'en faisant tourner la roue couplée (11) accouplée par rapport à la roue de tambour (9) de la valeur du jeu (21), chaque organe de blocage (31) peut être amené en engagement et hors engagement dans l'une des rainures (25).

2. Machine d'extraction à tambour selon la revendication 1, **caractérisée en ce qu'**en direction d'accouplement (15), chaque organe de blocage (31) est placé sur la face frontale (30) arrière de la roue couplée (11) de l'une des dents de la denture extérieure (20) de la roue couplée (11).

3. Machine d'extraction à tambour selon la revendication 1 ou la revendication 2, **caractérisée en ce que** chaque organe de blocage (31) saillit par-dessus l'un des deux flancs de dent (20a, b) de l'une des dents de la denture extérieure (20) de la roue couplée (11), s'agissant du flanc de dent (20a), qui sous la charge du couple de rotation appliqué par le tambour (4) amovible sur l'arbre principal (2) est adjacent à un flanc de dent (19a) de la roue de tambour (9).

4. Machine d'extraction à tambour selon l'une quelconque des revendications 1 à 3, **caractérisée en ce que** la machine d'extraction à tambour (1) comporte au moins une butée (33) qui délimite la capacité de déplacement axial de la roue couplée (11) dans la direction d'accouplement (15).

5. Machine d'extraction selon la revendication 4, **caractérisée en ce que** la butée (33) est fixée sur la roue couplée (11) et comporte une surface de butée pour une dent de la denture intérieure (19) de la roue de tambour (9).

6. Machine d'extraction à tambour selon la revendication 4 ou la revendication 5, **caractérisée en ce qu'**au moins une butée (33) et au moins un organe de blocage (31) sont conçus en monobloc.

7. Machine d'extraction à tambour selon l'une quelconque des revendications 4 à 6, **caractérisée en ce**
- **qu'**une partie (26) de chaque dent de la denture intérieure (19) de la roue de tambour (9) qui déborde lorsque la roue couplée (11) est accouplée présente une hauteur de dent (27) moins importante que la partie (28) se trouvant en engagement de chaque dent de la denture intérieure (19) de la roue de tambour (9),
- **qu'**entre la partie (26) débordante et la partie (28) se trouvant en engagement s'étend la rainure (25) et
- **que** la hauteur de dent (27) de la partie (26) débordante est déterminée de telle sorte que lors d'un déplacement axial de la roue couplée (11) dans la direction d'accouplement (15), exclusivement la face frontale (34) de la partie (28) qui est en engagement de la dent vient s'appliquer sur la butée (33).

8. Machine d'extraction à tambour selon l'une quelconque des revendications 1 à 7, **caractérisée en ce que** l'organe de blocage (31) est relié avec un élément de renfort (32b) fixé sur la roue couplée (11).

9. Machine d'extraction à tambour selon l'une quelconque des revendications 1 à 8, **caractérisée en ce que** la bague coulissante (12) comporte une denture intérieure (24) qui est déplaçable en direction axiale, dans la direction d'accouplement et de désaccouplement (15, 16) sur la denture extérieure (23) du volant (10).

10. Machine d'extraction à tambour selon l'une quelconque des revendications 1 à 9, **caractérisée en ce que** la bague coulissante (12) entoure une jante (12a) de forme annulaire qui est reliée de manière solidaire en rotation avec la bague coulissante (12) et **en ce que** pour déplacer la bague coulissante (12), le dispositif de commutation (14) comporte au moins un vérin hydraulique (37a, b), dont les tiges de piston sont munies chacune du côté extrémité d'une griffe (38) entourant la jante (12a).

11. Machine d'extraction à tambour selon la revendication 10, **caractérisée en ce que** les griffes (38) sont reliées les unes aux autres par un élément (44) formant cadre.

12. Procédé destiné à désaccoupler un dispositif d'enfichage d'une machine d'extraction à tambour selon la revendication 1, **caractérisé en ce**
- **qu'**avant le désaccouplement de la roue couplée (11), on immobilise le tambour (4) amovible avec un frein (7),
- **qu'**en faisant tourner la roue couplée (11) accouplée par rapport à la roue de tambour (9) immobilisée en direction du couple de rotation appliqué par le tambour (4) amovible sur l'arbre principal (2) de la valeur du jeu (21), on met hors engagement chaque organe de blocage (31),
- **qu'**on déplace ensuite la roue couplée (11), à l'aide du dispositif de commutation (14) aussi loin en direction axiale dans la direction de désaccouplement (16), jusqu'à ce que la denture extérieure (20) de la roue couplée (11) soit hors engagement avec la denture intérieure (19) de la roue de tambour (9) et
- **que** pour poursuivre le fonctionnement, en met l'arbre principal (2) en rotation.

13. Procédé destiné à accoupler un dispositif d'enfichage d'une machine d'extraction à tambour selon la revendication 1, **caractérisé en ce**
- **qu'**avant d'accoupler la roue couplée (11), on immobilise le tambour (4) amovible avec un frein (7),
- **qu'**on oriente les dents de la denture extérieure (20) de la roue couplée 11) en alignement sur les entredents de la denture intérieure (19) de la roue de tambour (9),
- **qu'**on déplace ensuite la roue couplée (11) à l'aide du dispositif de commutation (14) en direction axiale, dans la direction d'accouplement (15) aussi loin jusqu'à ce que la denture extérieure (20) de la roue couplée (11) soit en engagement avec la denture intérieure (19) de la roue de tambour (9) et que chaque organe de blocage (31) soit situé dans le prolongement de l'une des rainures (25) s'étendant dans la direction périphérique,
- **qu'**on fait tourner la roue de tambour (9) par rapport à la roue couplée (11), en direction du couple de rotation appliqué par le tambour (4) amovible sur l'arbre principal (2), de la valeur du jeu, chaque organe de blocage étant amené en engagement dans l'une des rainures et
- **que** pour poursuivre le fonctionnement, en met l'arbre principal en rotation.
